# EUROPEAN PATENT APPLICATION

(11) **EP 4 803 444 A1**
(43) Date of publication of application: **09.09.2026**
(21) Application number: 23957562.4
(22) Date of filing: 30.10.2023
(51) Int. Cl.: B65G 1/00, B65G 1/137

(54) **TRANSPORT SYSTEM, AUTOMATED GUIDED VEHICLE, AND POSITION IDENTIFICATION METHOD**

(71) Applicant: Fuji Corporation, Chiryu-shi, Aichi 472-8686 (JP)
(72) Inventor: ODA Takuya, Chiryu-shi, Aichi 472-8686 (JP); SHIRAKI Shohei, Chiryu-shi, Aichi 472-8686 (JP)
(74) Representative: Grünecker Patent- und Rechtsanwälte PartG mbB
(86) International application number: PCT/JP2023/039062
(87) International publication number: WO 2025/094230

(57) **Abstract**

A transport system including multiple automated guided vehicles each provided with a detection section configured to emit infrared light and detect reflected light includes: multiple marks that are provided to correspond to multiple specific positions each assigned to one of the multiple automated guided vehicles, the multiple marks each having a different pattern including a region having a high infrared absorptivity and a region having a low infrared absorptivity; a storage section configured to store association information in which information regarding assignment of the specific positions is associated with information regarding the pattern of each mark; and an identification section configured to recognize the specific position based on a detection result detected by the detection section and the association information, and to identify whether the recognized specific position is a position assigned to the automated guided vehicle that has detected the mark.

## Description

### Technical Field

The present description discloses a transport system, an automated guided vehicle, and a position identification method.

### Background Art

Conventionally, a system has been proposed that enables an automated guided vehicle used in a shop, a factory, a warehouse, or the like to recognize a position or the like (for example, see Patent Literature 1). In this system, a mark having multiple cells including a first cell that is reflective of infrared light and a second cell that is non-reflective of infrared light is arranged on a two-dimensional plane. The automated guided vehicle emits infrared light from an irradiation section toward the mark, captures an image of the mark with a camera, and analyzes image data to recognize a distance and a direction in which the mark is located.

### Citation List

### Patent Literature

Patent Literature 1: JP-A-2019-102047

### Summary of the Invention

### Technical Problem

Meanwhile, in a system in which multiple automated guided vehicles are used, specific positions such as a charging position or a standby position may be assigned to each automated guided vehicle. In such a case, it is required that the automated guided vehicle be able to appropriately identify to which automated guided vehicle the specific position is assigned.

A main object of the present disclosure is to enable an automated guided vehicle to appropriately identify a specific position.

### Solution to Problem

The present disclosure employs the following means to achieve the main object described above.

The transport system according to the present disclosure is
a transport system including multiple automated guided vehicles each provided with a detection section configured to emit infrared light and detect reflected light, the transport system including:
multiple marks that are provided to correspond to multiple specific positions each assigned to one of the multiple automated guided vehicles, the multiple marks each having a different pattern including a region having a high infrared absorptivity and a region having a low infrared absorptivity;
a storage section configured to store association information in which information regarding assignment of the specific positions is associated with information regarding the pattern of each mark; and
an identification section configured to recognize the specific position based on a detection result detected by the detection section and the association information, and to identify whether the recognized specific position is a position assigned to the automated guided vehicle that has detected the mark.

In the transport system of the present disclosure, multiple marks each having a different pattern including a region having a high infrared absorptivity and a region having a low infrared absorptivity are provided to correspond to multiple specific positions. Then, the specific position is recognized based on a detection result detected by the detection section of the automated guided vehicle and association information in which information regarding assignment of the specific positions is associated with information regarding the pattern of each mark, and it is identified whether the recognized specific position is a position assigned to the automated guided vehicle that has detected the mark. Accordingly, the specific position can be appropriately identified by the automated guided vehicle.

### Brief Description of Drawings

Fig. 1 is a schematic configuration diagram of transport system 1.
Fig. 2 is an external perspective view of automated guided vehicle 10 and caged cart 100.
Fig. 3 is an external perspective view of automated guided vehicle 10.
Fig. 4 is a side view of automated guided vehicle 10.
Fig. 5 is a side view of automated guided vehicle 10.
Fig. 6 is a view illustrating a state where automated guided vehicle 10 has slipped under caged cart 100.
Fig. 7 is a view illustrating a state where automated guided vehicle 10 is coupled to caged cart 100.
Fig. 8 is a block diagram of transport system 1.
Fig. 9 is an external perspective view of charging point 80.
Fig. 10 is a diagram illustrating an example of mark 86A and a detection result.
Fig. 11 is a diagram illustrating an example of mark 86B and a detection result.
Fig. 12 is a diagram illustrating an example of association information 62a (41a).
Fig. 13 is a flowchart showing an example of charging point identification processing.
Fig. 14 is a diagram illustrating mark 86 according to a modification.

### Description of Embodiments

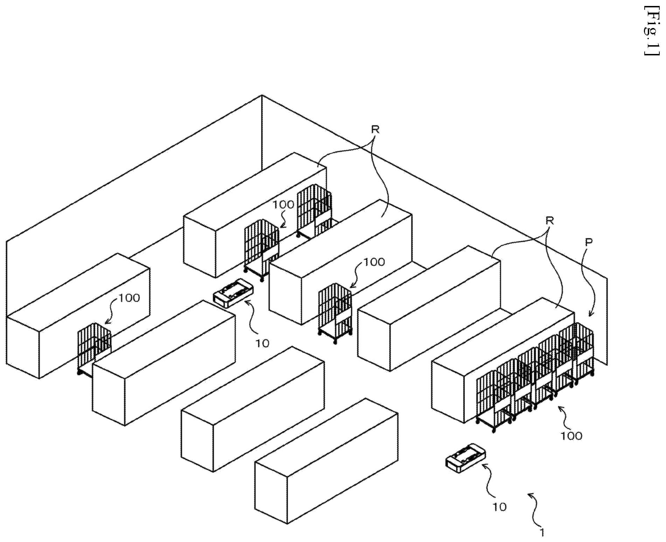

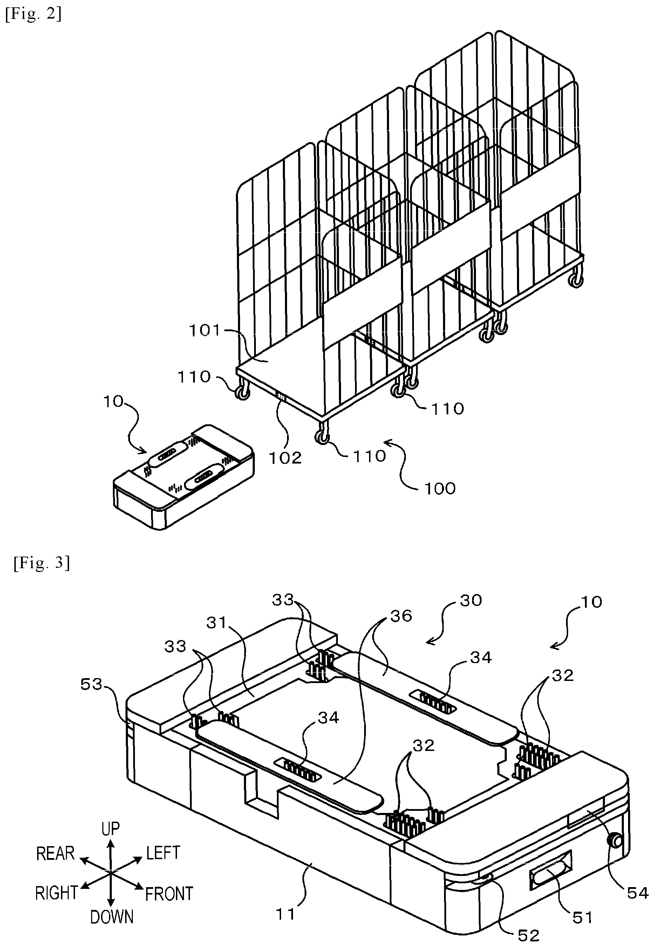

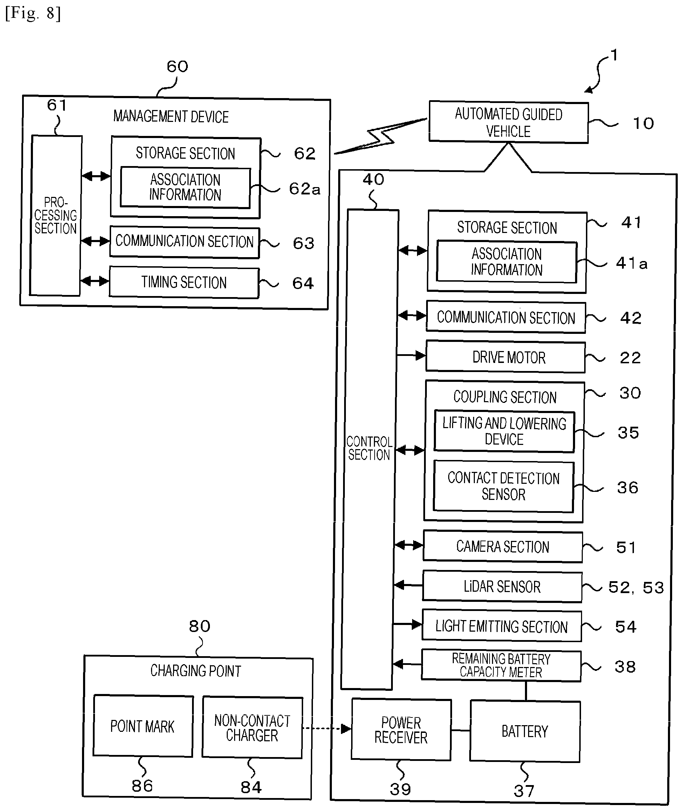

An embodiment of the present disclosure will be described with reference to the drawings. Fig. 1 is a schematic configuration diagram of transport system 1. Fig. 2 is an external perspective view of automated guided vehicle 10 and caged cart 100. As illustrated in Fig. 1, transport system 1 is used in a distribution center, a warehouse, a shop, or the like having multiple shelves R, and includes multiple automated guided vehicles 10 and management device 60 (see Fig. 8) that manages operations of automated guided vehicles 10. Automated guided vehicle 10 is an autonomous mobile robot (AMR) that couples to caged cart 100 located at caged-cart storage area P and transports caged cart 100 to designated shelf R.

As illustrated in Fig. 2, for example, caged cart 100 has rectangular and mesh-shaped loading platform portion 101 on which cargo can be loaded, and multiple (for example, four) casters 110 that are rotatably attached to a lower surface of loading platform portion 101. Cart mark 102, such as an AR marker, a two-dimensional code, or a barcode, for identifying caged cart 100 is provided on loading platform portion 101 of caged cart 100. By reading cart mark 102, automated guided vehicle 10 recognizes caged cart 100 (transport target cart) to be transported and the type of the cargo loaded on loading platform portion 101. Cart mark 102 may be attached to the cargo loaded on loading platform portion 101.

As illustrated in Fig. 3, automated guided vehicle 10 of the present embodiment has a flat rectangular parallelepiped appearance with a low height. Automated guided vehicle 10 includes vehicle body portion 11, multiple (for example, four) wheels 21 rotatably attached to a bottom surface of vehicle body portion 11, and multiple (for example, four) drive motors 22 (see Fig. 8) that respectively rotate and drive corresponding wheels 21. In the present embodiment, multiple wheels 21 are configured as mecanum wheels having multiple rollers rotatable around an axis inclined by 45 degrees with respect to a rotation axis of the wheel on an outer periphery of the wheel. Automated guided vehicle 10 can move vehicle body portion 11 in all directions or make vehicle body portion 11 turn (such as a spin turn, a pivot turn, or a power turn) by independently controlling rotation directions and rotation speeds of corresponding wheels 21 with multiple drive motors 22. Multiple wheels 21 may also be configured as omni wheels having multiple rollers that can rotate around an axis that intersects three-dimensionally with respect to the rotation axis of the wheel. That is, multiple wheels 21 may be any type of wheels, as long as the wheels are capable of moving vehicle body portion 11 in multiple directions and turning vehicle body portion 11.

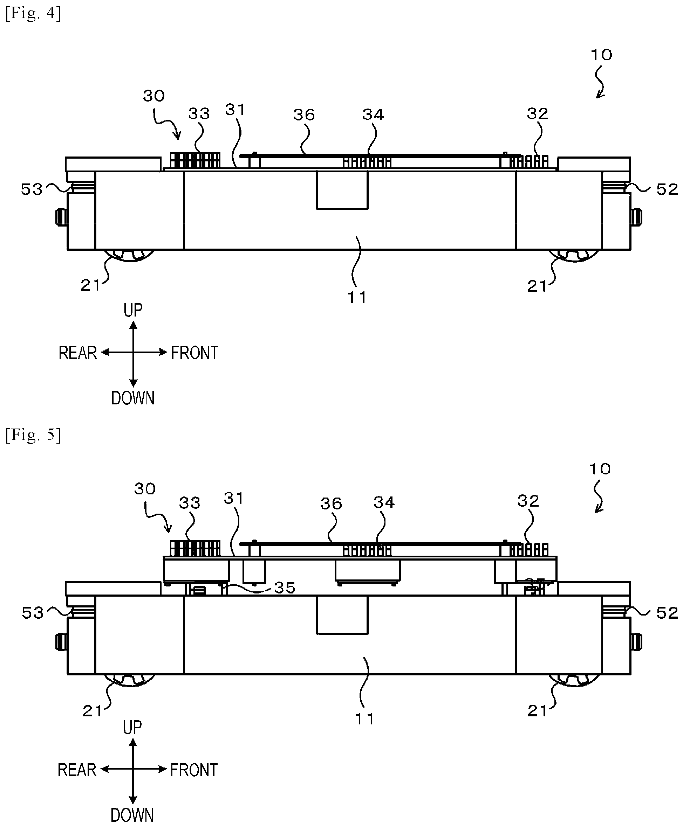

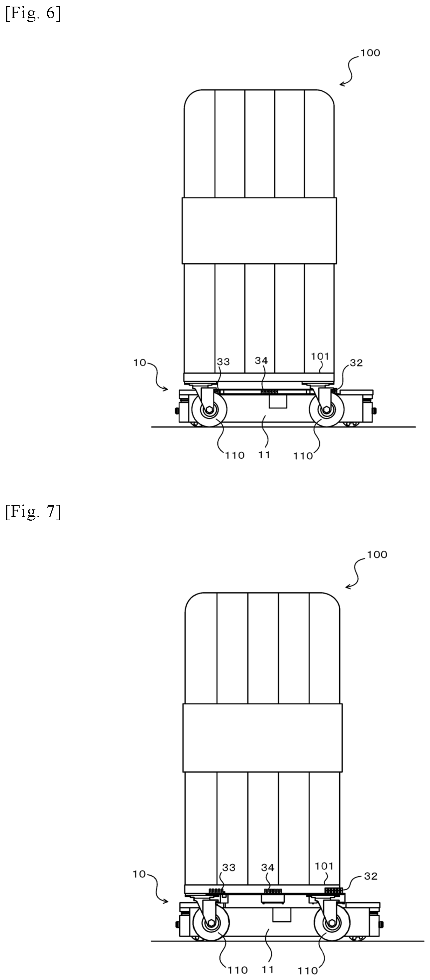

In addition, as illustrated in Figs. 4 and 5, automated guided vehicle 10 includes coupling section 30 that is provided on an upper surface of vehicle body portion 11 and that can be coupled to caged cart 100 in a state where vehicle body portion 11 has slipped under caged cart 100. Coupling section 30 includes flat plate-shaped lifting and lowering plate 31, coupling pins 32, 33, and 34 that extend upward with respect to lifting and lowering plate 31, and lifting and lowering device 35 that lifts and lowers lifting and lowering plate 31. Lifting and lowering plate 31 has a left-right width substantially equal to a left-right width of vehicle body portion 11 to cover the upper surface of vehicle body portion 11 and a front-rear width slightly shorter than a front-rear width of vehicle body portion 11. Coupling pin 32 is provided at a front portion of lifting and lowering plate 31, coupling pin 33 is provided at a rear portion of lifting and lowering plate 31, and coupling pin 34 is provided at an intermediate portion between the front portion and the rear portion of lifting and lowering plate 31. As illustrated in Figs. 6 and 7, in coupling section 30, lifting and lowering plate 31 is lifted by lifting and lowering device 35 in a state where vehicle body portion 11 has slipped under caged cart 100, thereby causing at least one of coupling pins 32, 33, and 34 to engage with an underside of loading platform portion 101 of caged cart 100. Accordingly, automated guided vehicle 10 and caged cart 100 are coupled to each other, and automated guided vehicle 10 can transport caged cart 100.

As illustrated in Figs. 3 to 5, contact detection sensors 36 (spring sensors) for detecting that coupling section 30 (coupling pins 32, 33, and 34) is in contact with (coupled to) loading platform portion 101 of caged cart 100 are provided on both left and right sides of lifting and lowering plate 31. Contact detection sensor 36 includes a plate that is biased upward by a spring, with its upper end positioned at approximately the same height as coupling pins 32, 33, and 34 with respect to lifting and lowering plate 31. When coupling pins 32, 33, and 34 are engaged with loading platform portion 101 of caged cart 100, the plates of contact detection sensors 36 come into contact with loading platform portion 101, and are lowered relative to coupling pins 32, 33, and 34 while the spring is compressed. Contact detection sensor 36 detects that coupling section 30 is in contact with (coupled to) loading platform portion 101 of caged cart 100 by detecting a state where the plate is relatively lowered.

Furthermore, as illustrated in Fig. 8, automated guided vehicle 10 includes control section 40 that performs overall control, storage section 41 that stores various information, communication section 42, camera section 51 as an imaging device, light detection and ranging (LiDAR) sensors 52 and 53, and light emitting section 54 that illuminates an area ahead of vehicle body portion 11. Communication section 42 performs communication (wireless communication) with management device 60 and the like. Camera section 51 is installed on a front surface of vehicle body portion 11 to recognize the area ahead of vehicle body portion 11. LiDAR sensors 52 and 53 scan the surroundings with infrared laser light, receive reflected light, measure a time until the reflected light is received, and measure distance data for each scanning angle to obtain surrounding point cloud data, thereby detecting surrounding interfering objects. LiDAR sensors 52 and 53 are respectively installed on the front surface and the rear surface of vehicle body portion 11. Light emitting section 54 is installed on the front surface of vehicle body portion 11, and illuminates the area ahead of vehicle body portion 11 to make it easier for camera section 51 to recognize surrounding objects in dark environments.

Further, automated guided vehicle 10 includes battery 37 that supplies power to each section such as each drive motor 22, lifting and lowering device 35, control section 40, storage section 41, communication section 42, camera section 51, LiDAR sensors 52 and 53, and light emitting section 54, remaining battery capacity meter 38, and power receiver 39. Battery 37 is a chargeable and dischargeable secondary battery, and for example, a lithium ion battery is used. Remaining battery capacity meter 38 includes a current sensor attached to an output terminal of battery 37, a voltage sensor attached between output terminals of battery 37, and the like, and calculates a ratio of the residual capacity to the maximum capacity of battery 37 as the remaining battery capacity based on a detection value of each sensor. Power receiver 39 includes, for example, a power receiving coil that receives power supplied in a non-contact manner at charging point 80 and a power conversion circuit, and converts the received power into power that can be output to battery 37 by the power conversion circuit and outputs the power.

Control section 40 is configured as a microprocessor centered on CPU, and includes ROM storing a processing program, RAM temporarily storing data, a timing section, and the like in addition to the CPU. As illustrated in Fig. 8, control section 40 receives an image signal from camera section 51, detection signals from LiDAR sensors 52 and 53, a detection signal from contact detection sensor 36, the remaining battery capacity from remaining battery capacity meter 38, and the like. Control section 40 outputs a control signal to drive motor 22, a control signal to lifting and lowering device 35, a control signal to light emitting section 54, and the like. Storage section 41 is a storage such as an HDD or an SSD, and stores various information such as association information 41a. Association information 41a is information regarding a pattern (formation pattern) of mark 86 provided at charging point 80, and details of which will be described later.

As illustrated in Fig. 8, management device 60 includes processing section 61, storage section 62, communication section 63 for performing communication (wireless communication) with automated guided vehicle 10, and timing section 64 that acquires time. In addition, input devices such as a mouse and a keyboard, a display, and the like are connected to management device 60. Processing section 61 is configured as a microprocessor centered on CPU, and includes ROM storing a processing program, RAM temporarily storing data, and the like in addition to the CPU. Storage section 62 is a storage such as an HDD or an SSD, and stores various information such as association information 62a similar to association information 41a.

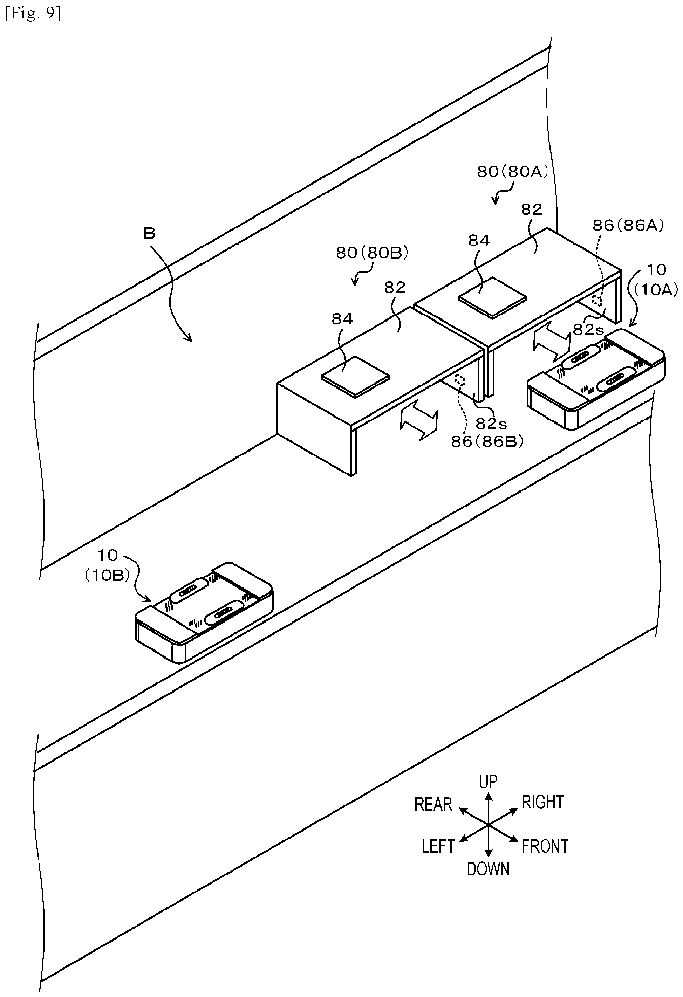

As illustrated in Fig. 9, charging point 80 is provided in, for example, stockroom B of a distribution center, a warehouse, a shop, or the like, and is a position where automated guided vehicle 10 is charged and kept on standby. In the present embodiment, charging point 80 is assigned to each automated guided vehicle 10. For example, in the case of two automated guided vehicles 10, charging point 80A is assigned to automated guided vehicle 10A, and charging point 80B is assigned to automated guided vehicle 10B. Charging points 80A and 80B have the same configuration. Although not illustrated, empty caged carts 100, caged carts 100 loaded with cargo, cargo to be loaded, and the like may be disposed in stockroom B.

Each of charging points 80A and 80B is provided with frame unit 82 having a size capable of accommodating automated guided vehicle 10. Frame unit 82 has a gate-shaped configuration that is open at front and rear sides in Fig. 9 and includes left and right side walls 82s and an upper wall, and is disposed along a wall of stockroom B. Automated guided vehicle 10 enters and exits frame unit 82 through a front-side opening of frame unit 82. Non-contact charger 84 is provided on the upper wall of frame unit 82, and mark 86 is provided on first side wall 82s (inner wall) of left and right side walls 82s.

Non-contact charger 84 is a contactless charger including a power transmission coil that supplies power to power receiver 39 of automated guided vehicle 10. Non-contact charger 84 is provided on the upper wall of frame unit 82 to face power receiver 39 when automated guided vehicle 10 stops at a predetermined position in frame unit 82, and supplies power to power receiver 39 in a non-contact manner to charge battery 37 of automated guided vehicle 10. Charging point 80 is not limited to charging automated guided vehicle 10 in a non-contact manner, and may charge automated guided vehicle 10 through contact with automated guided vehicle 10.

Mark 86 is a mark including a region having a high infrared absorptivity and a region having a low infrared absorptivity relative to the region having a high infrared absorptivity, and in the present embodiment, the region having a high infrared absorptivity and the region having a low infrared absorptivity alternately appear in a lateral direction to form a barcode-like pattern. Mark 86 has a different pattern for each of charging points 80A and 80B. Charging point 80A is provided with mark 86A, and charging point 80B is provided with mark 86B.

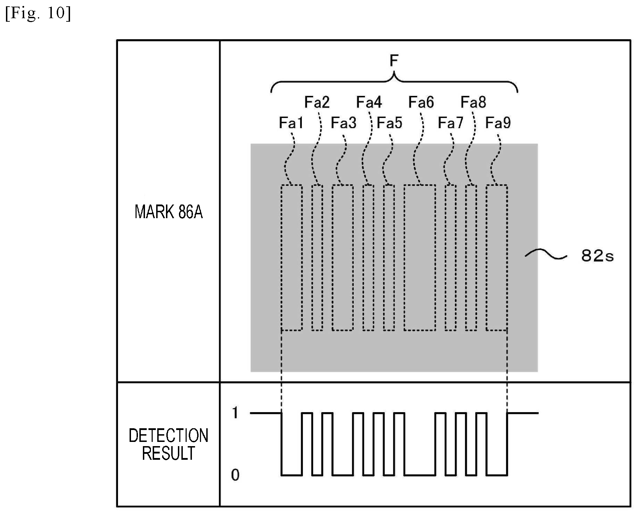

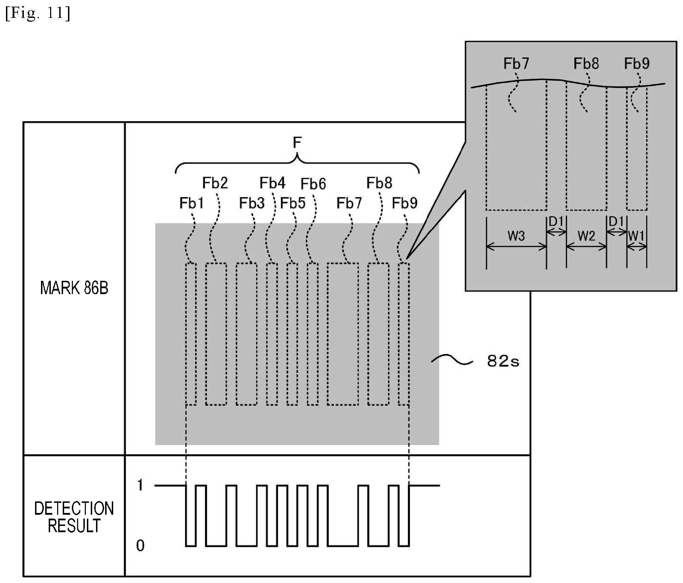

Fig. 10 is a diagram illustrating an example of mark 86A and a detection result, and Fig. 11 is a diagram illustrating an example of mark 86B and a detection result. In the present embodiment, each of marks 86A and 86B is provided by attaching, to side wall 82s of frame unit 82, multiple transparent films F having a higher infrared absorptivity than that of side wall 82s. For example, mark 86A has nine films F of films Fa1 to Fa9 in order from the left side. Similarly, mark 86B has nine films F of films Fb1 to Fb9 in order from the left side. Although film F is indicated by a dotted line for convenience of illustration, since film F is actually transparent, it is difficult for workers, shop staff, or the like to visually recognize film F. That is, it is difficult to visually recognize marks 86A and 86B.

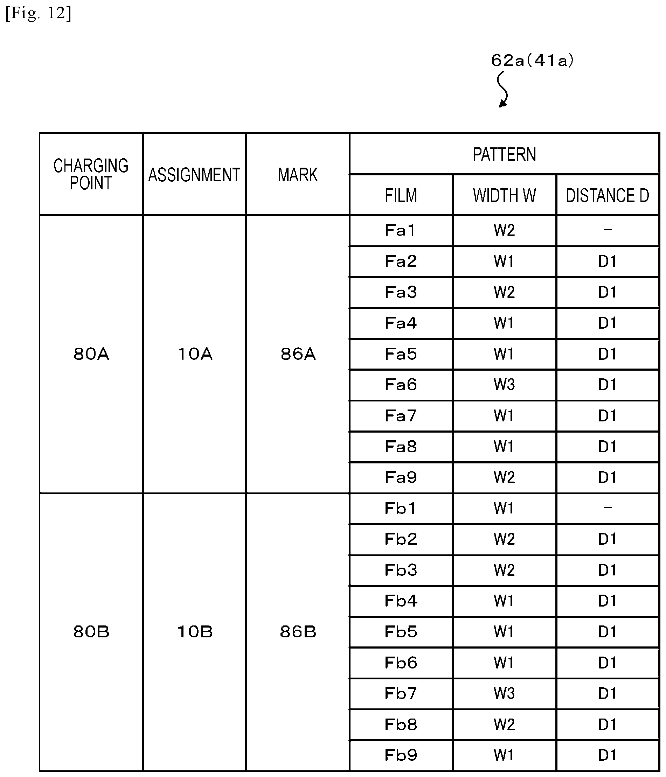

In addition, each of marks 86A and 86B has a different pattern by attaching three types of films F having widths W in the lateral direction of W1, W2, and W3 (W1 < W2 < W3, see Fig. 11) in different arrangements (combinations) with a predetermined interval D1 therebetween. As illustrated in Fig. 12, in association information 62a (41a), a pattern including width W and interval D (D1 in the present embodiment) between adjacent films F is stored for each of films Fa1 to Fa9 and Fb1 to Fb9 of marks 86A and 86B. In order to indicate interval D with respect to film F on the left side, interval D of leftmost films Fa1 and Fb1 is not defined.

Further, as described above, since film F has a higher infrared absorptivity than that of side wall 82s, an amount of received light is smaller when reflected light is received from film F than when reflected infrared light is received from side wall 82s. Accordingly, detection signals of LiDAR sensors 52 and 53 have large values in regions corresponding to intervals D1 between films F, that is, regions of side wall 82s to which film F is not attached, and have small values in regions to which films F are attached. Therefore, detection values obtained by binarizing the detection signals of LiDAR sensors 52 and 53 into a value 0 or a value 1 become the value 1 in regions of side wall 82s where film F is not attached (regions corresponding to intervals D1), and become the value 0 in regions where films F are attached (regions corresponding to widths W). Since the patterns of marks 86A and 86B are different, detection results when LiDAR sensors 52 and 53 detect marks 86A and 86B are also different from each other.

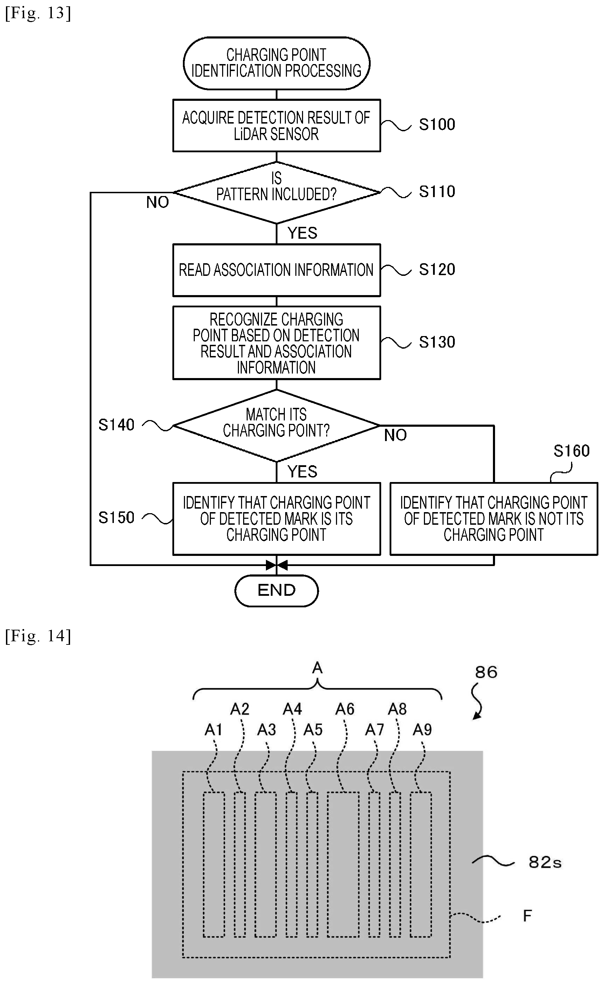

Next, an operation of automated guided vehicle 10 of transport system 1 of the present embodiment configured as described above will be described. In particular, an operation performed when automated guided vehicle 10 identifies charging point 80 assigned thereto will be described. Fig. 13 is a flowchart illustrating an example of charging point identification processing. This processing is executed by control section 40.

In a charging point identification processing, control section 40 acquires a detection result based on detection signals from LiDAR sensors 52 and 53 (S100). Next, control section 40 determines whether the detection result includes a pattern (predetermined pattern) in which binarized detection values (value 1, value 0) are switched at interval D1, as in the detection results of marks 86A and 86B described above (S110). When it is determined that such a pattern is not included, control section 40 ends the processing.

To the contrary, when it is determined that such a pattern is included, control section 40 reads association information 41a from storage section 41 (S120), and recognizes charging point 80 based on the detection result and association information 41a (S130). In S130, control section 40 selects mark 86 corresponding to the pattern from association information 41a based on width W and interval D obtained by analyzing the pattern of the current detection result, and recognizes charging point 80 corresponding to selected mark 86 from association information 41a. Subsequently, control section 40 determines whether recognized charging point 80 matches charging point 80 assigned to automated guided vehicle 10 (S140).

When control section 40 determines in S140 that there is a match, control section 40 identifies that charging point 80 where detected mark 86 is provided is charging point 80 assigned thereto (S150), and ends the present processing. To the contrary, when control section 40 determines in S140 that there is no match, control section 40 identifies that charging point 80 where detected mark 86 is provided is not charging point 80 assigned thereto (S160), and ends the present processing.

After identifying that charging point 80 is the charging point assigned to automated guided vehicle 10, control section 40 causes automated guided vehicle 10 to enter frame unit 82 of charging point 80 and stop at a predetermined position. As a result, charging of battery 37 is started by non-contact charging. Here, when automated guided vehicle 10 is erroneously charged at charging point 80 that is not assigned thereto, automated guided vehicle 10 may incorrectly estimate its position when charging is completed and automated guided vehicle 10 departs. In the present embodiment, since automated guided vehicle 10 can be charged at correct charging point 80 assigned thereto, it is possible to prevent erroneous estimation of its position when charging is completed and automated guided vehicle 10 departs.

Here, correspondence relationships between the elements of the present embodiment and the elements of the present disclosure will be clarified. Mark 86 of the present embodiment corresponds to a mark of the present disclosure, and storage section 41 (or storage section 62) corresponds to a storage section. Automated guided vehicle 10 corresponds to an automated guided vehicle, LiDAR sensors 52 and 53 correspond to a detection section and a LiDAR sensor, and control section 40 that executes the charging point identification processing corresponds to an identification section. In the present embodiment, an example of a position identification method of the present disclosure is also clarified by describing the operations of transport system 1 and automated guided vehicle 10 (control section 40).

In transport system 1 of the embodiment described above, multiple marks 86 each having a different pattern including a region having a high infrared absorptivity and a region having a low infrared absorptivity are provided to correspond to multiple charging points 80 (specific positions). Then, when mark 86 is detected by LiDAR sensors 52 and 53, automated guided vehicle 10 recognizes charging point 80 corresponding to mark 86 based on association information 41a, and identifies whether charging point 80 is the charging point assigned thereto. Therefore, by causing automated guided vehicle 10 to detect mark 86 provided at charging point 80, it is possible to cause automated guided vehicle 10 to appropriately identify charging point 80 assigned thereto.

Mark 86 is provided by attaching, to side wall 82s that constitutes the region having a low infrared absorptivity (first region), transparent film F (transparent member) having a higher infrared absorptivity than that of side wall 82s. Therefore, since it is difficult to visually recognize mark 86, automated guided vehicle 10 can be caused to appropriately identify charging point 80 without impairing appearance or design quality.

In addition, mark 86 is provided such that the regions having the high infrared absorptivity and the regions having the low infrared absorptivity are alternately arranged along the lateral direction (predetermined direction) and the pattern differs in widths W of the regions in the lateral direction. Therefore, it is possible to easily differentiate the patterns of marks 86 corresponding to multiple charging points 80, and to facilitate identification of differences among marks 86, thereby suppressing erroneous detection of marks 86.

Further, automated guided vehicle 10 detects mark 86 by LiDAR sensors 52 and 53. Therefore, since LiDAR sensors 52 and 53 can be used for both the detection of surrounding objects and the detection of mark 86, automated guided vehicle 10 can be caused to appropriately identify charging point 80 without providing a sensor or a camera dedicated to mark detection.

It goes without saying that the present disclosure is not limited to the above-described embodiment in any way, and the present disclosure can be embodied in various aspects without departing from the technical scope of the present disclosure.

In the embodiment, automated guided vehicle 10 detects mark 86 by LiDAR sensors 52 and 53 used to detect surrounding objects, but they are not limited to LiDAR sensors as long as infrared light is emitted and reflected light is detected. A sensor dedicated to mark detection may be provided. However, in order to reduce the number of components, the configuration as in the embodiment is preferable.

In the embodiment, charging point 80 is exemplified as the specific position assigned to automated guided vehicle 10, but the specific position is not limited thereto, and another position such as a temporary standby position of automated guided vehicle 10 may be used as the specific position. In addition, the configuration is not limited to a case in which one automated guided vehicle 10 is assigned to one specific position, and two or more automated guided vehicles 10 may be assigned to one specific position. That is, there may be a specific position shared by two or more automated guided vehicles 10. The specific position is not limited to being provided in stockroom B, and may be provided in a sales floor of a shop or the like. When the specific position is provided in a sales floor or the like, customers visiting the shop, in addition to workers and shop staff, visually recognize mark 86. Therefore, the significance of making mark 86 difficult to be visually recognized in order to avoid impairing appearance and design is high.

In the embodiment, marks 86A and 86B are configured such that films F have different widths W while having the same number; however, the configuration is not limited thereto, and films F may have same width W while differing in number. Alternatively, films F may have different widths W and different numbers. In addition, although interval D between films F is set to constant interval D1, the pattern may be made different by varying interval D. That is, the pattern only needs to differ by making at least one of width W, the number, and interval D different. In addition, although marks 86A and 86B are formed in a barcode-like pattern, any pattern may be used as long as a detection section such as LiDAR sensors 52 and 53 can detect differences in the pattern.

In the embodiment, mark 86 to which film F (second member) having a higher infrared absorptivity than that of side wall 82s (predetermined member, first member) is attached is exemplified, but the mark is not limited thereto, and film F having a lower infrared absorptivity than that of side wall 82s may be attached. Film F is not limited to a transparent member and may be an opaque member. In the case of the opaque member, it is possible to make it difficult to recognize mark 86 by using film F having the same color as the color of side wall 82s.

In addition, as illustrated in a modification of Fig. 14, mark 86 may be provided by partially applying a transparent infrared absorbing agent (paint) to transparent film F attached to side wall 82s. In a modification, mark 86 includes application region A (A1 to A9, a region having a high infrared absorptivity) in which an infrared absorbing agent is applied on transparent film F, and a region (a region having a low infrared absorptivity) in which an infrared absorbing agent is not applied on transparent film F. Note that transparent film F is not limited thereto, and mark 86 only needs to be provided by applying a transparent infrared absorbing agent to a transparent member to form application region A. That is, mark 86 only needs to be provided by forming, on a transparent member that constitutes a first region of the region having a high infrared absorptivity and the region having a low infrared absorptivity, application region A of a transparent infrared absorbing agent having a different infrared absorptivity, such that application region A constitutes a second region thereof. Alternatively, mark 86 is not limited to being provided by attaching film F or the like to side wall 82s and applying an infrared absorbing agent, and may be provided by applying an infrared absorbing agent having an infrared absorptivity different from that of side wall 82s or the like to a structure or a member such as side wall 82s. In this case, it is possible to make it difficult to recognize mark 86 by using an infrared absorbing agent having the same color as the color of side wall 82s. Further, mark 86 is not limited to being provided on side wall 82s of charging point 80, and mark 86 may be provided on a pillar, a floor, or the like in addition to the wall of stockroom B. Further, mark 86 is not limited to being provided on a fixed object, and may be provided on a movable object whose position can be moved by workers, shop staff, or the like.

In the embodiment, mark 86 is provided to be difficult to visually recognize, but is not limited thereto. For example, the region having a high infrared absorptivity and the region having a low infrared absorptivity may be made of different colors or different members so as to be easily visually recognizable. However, in order not to impair appearance and design quality, the configuration as in the embodiment is preferable.

In the embodiment, association information 41a stored in storage section 41 of automated guided vehicle 10 and association information 62a stored in storage section 62 of management device 60 are the same information, but the present disclosure is not limited thereto. Association information 41a only needs to store at least association information for mark 86 of charging point 80 assigned to automated guided vehicle 10. For example, association information 41a of automated guided vehicle 10A only needs to include association information for mark 86A, and association information 41a of automated guided vehicle 10B only needs to include association information for mark 86B. Alternatively, automated guided vehicle 10 is not limited to storing association information 41a in storage section 41, and may acquire association information 62a through communication with management device 60 when executing the charging point identification processing. That is, control section 40 acquires the association information by reading the association information from storage section 41 in S120 of the charging point identification processing, but may acquire the association information through communication with management device 60 or the like.

In the embodiment, control section 40 of automated guided vehicle 10 executes the charging point identification processing, but the present disclosure is not limited thereto. For example, processing section 61 of management device 60 may execute the charging point identification processing. In this case, processing section 61 only needs to receive detection results of LiDAR sensors 52 and 53 from automated guided vehicle 10, execute the charging point identification processing, and transmit the execution result to automated guided vehicle 10. In addition, although the present disclosure is applied to transport system 1 and automated guided vehicle 10, the present disclosure may be applied to a position identification method.

The present description also discloses a technical idea in which "the transport system according to Claim 1 or 2" in Claim 4 as originally filed is changed to "the transport system according to any one of Claims 1 to 3", a technical idea in which "the transport system according to Claim 1 or 2" in Claim 5 as originally filed is changed to "the transport system according to any one of Claims 1 to 4", and a technical idea in which "the transport system according to Claim 1 or 2" in Claim 6 as originally filed is changed to "the transport system according to any one of Claims 1 to 5".

### Industrial Applicability

The present disclosure is applicable to a technical field in which transport is performed by an automated guided vehicle.

### Reference Signs List

1: transport system, 10: automated guided vehicle (AMR), 11: vehicle body portion, 21: wheel, 22: drive motor, 30: coupling section, 31: lifting and lowering plate, 32, 33, 34: coupling pin, 35: lifting and lowering device, 36: contact detection sensor, 37: battery, 38: remaining battery capacity meter, 39: power receiver, 40: control section, 41: storage section, 41a, 62a: association information, 42: communication section, 51: camera section, 52, 53: LiDAR sensor, 54: light emitting section, 60: management device, 61: processing section, 62: storage section, 63: communication section, 64: timing section, 80, 80A, 80B: charging point, 82: frame unit, 82s: side wall, 84: non-contact charger, 86, 86A, 86B: mark (point mark), 100: caged cart, 101: loading platform portion, 102: cart mark, 110: caster, A, A1 to A9: application region, F, Fa1 to Fa9, Fb1 to Fb9: film, P: caged-cart storage area, R: shelf.

## Claims

1. A transport system including multiple automated guided vehicles each provided with a detection section configured to emit infrared light and detect reflected light, the transport system comprising:
multiple marks that are provided to correspond to multiple specific positions each assigned to one of the multiple automated guided vehicles, the multiple marks each having a different pattern including a region having a high infrared absorptivity and a region having a low infrared absorptivity;
a storage section configured to store association information in which information regarding assignment of the specific positions is associated with information regarding the pattern of each mark; and
an identification section configured to recognize the specific position based on a detection result detected by the detection section and the association information, and to identify whether the recognized specific position is a position assigned to the automated guided vehicle that has detected the mark.

2. The transport system according to Claim 1, wherein each mark is provided by attaching, to a predetermined member that constitutes a first region of the region having a high infrared absorptivity and the region having a low infrared absorptivity, a transparent member having an infrared absorptivity different from that of the predetermined member, such that the transparent member constitutes a second region thereof.

3. The transport system according to Claim 1, wherein each mark is provided by forming, on a transparent member that constitutes a first region of the region having a high infrared absorptivity and the region having a low infrared absorptivity, an application region of a transparent infrared absorbing agent having an infrared absorptivity different from the infrared absorptivity of the transparent member, such that the application region constitutes a second region thereof.

4. The transport system according to Claim 2 or 3, wherein each mark is provided such that the regions having the high infrared absorptivity and the regions having the low infrared absorptivity are alternately arranged along a predetermined direction and the pattern differs in at least one of width and the number of the regions in the predetermined direction.

5. The transport system according to Claim 1 or 2,
wherein the multiple specific positions are multiple charging positions to which the multiple automated guided vehicles are respectively assigned and at which batteries provided in the automated guided vehicles are charged, and
the identification section identifies whether the specific position derived based on the detection result and the association information is the charging position assigned to the automated guided vehicle that has detected the mark.

6. The transport system according to Claim 1 or 2, wherein the automated guided vehicle includes, as the detection section, a LiDAR sensor used to detect surrounding objects, and detects the mark by using the LiDAR sensor.

7. An automated guided vehicle comprising:
a detection section configured to emit infrared light and detect reflected light;
a storage section configured to store association information in which information regarding assignment of multiple specific positions each assigned to one of multiple automated guided vehicles is associated with information regarding patterns of multiple marks that are provided to correspond to the multiple specific positions, the multiple marks each having a different pattern including a region having a high infrared absorptivity and a region having a low infrared absorptivity; and
an identification section configured to recognize the specific position based on a detection result detected by the detection section and the association information, and to identify whether the recognized specific position is a position assigned to the automated guided vehicle.

8. A position identification method for identifying multiple specific positions each assigned to one of multiple automated guided vehicles each provided with a detection section configured to emit infrared light and detect reflected light, the position identification method comprising:
(a) a step of acquiring a detection result detected by the detection section;
(b) a step of acquiring association information in which information regarding assignment of the multiple specific positions is associated with information regarding patterns of multiple marks that are provided to correspond to the multiple specific positions, the multiple marks each having a different pattern including a region having a high infrared absorptivity and a region having a low infrared absorptivity; and
(c) a step of recognizing the specific position based on the detection result and the association information, and identifying whether the recognized specific position is a position assigned to the automated guided vehicle that has detected the mark.
